# EUROPEAN PATENT SPECIFICATION

(11) **EP 3 462 282 B1**
(45) Date of publication and mention of the grant of the patent: **03.01.2024**
(21) Application number: 17193532.3
(22) Date of filing: 27.09.2017
(51) Int. Cl.: G06F 3/01, B06B 1/12

(54) **VIBRATION-GENERATING DEVICE AND METHOD OF OPERATION**
VIBRATIONSERZEUGUNGSVORRICHTUNG UND VERFAHREN ZUM BETRIEB
DISPOSITIF DE GÉNÉRATION DE VIBRATION ET PROCÉDÉ DE FONCTIONNEMENT

(43) Date of publication of application: 03.04.2019
(73) Proprietor: Vestel Elektronik Sanayi ve Ticaret A.S., 45030 Manisa (TR)
(72) Inventor: KÍRÍSKEN, Barbaros, 45030 Manisa (TR)
(74) Representative: Kehl, Ascherl, Liebhoff & Ettmayr Patentanwälte Partnerschaft mbB

(56) References cited:
- WO-A1-01/24158
- US-A1- 2006 119 573
- US-A1- 2012 013 220
- US-A1- 2015 077 373
- US-A1- 2017 052 593

## Description

### Technical Field

The present disclosure relates to a vibration-generating device and method of operating a vibration-generating device.

### Background

Haptic technology (also called kinaesthetic technology) encompasses hardware and methods to enable a device to provide tactile stimulation to a user. In one such example, a user's phone may vibrate in a manner which can be felt by the user and thus alert the user to notifications on the phone. Vibrations may also be used to enhance a user experience by accompanying visual or audio events on the phone. For example, the smartphone may vibrate in response to the user earning a point in a game played on the phone.

To provide haptic feedback, the device comprises a vibration actuator. The vibration actuator generates vibrations in response to a control signal (e.g. from a processor of the device) at the appropriate time. Various different types of vibration actuators are available. Examples include: linear resonant actuators (LRAs) which generate vibrations by moving a mass in a linear manner (e.g. via the electromagnetic force); eccentric rotating mass (ERM) actuators, which generate vibrations by spinning an off-centre weight; and piezo actuators which generate vibrations by deforming a piezoelectric element using an applied voltage.

WO0124158A1 discloses a haptic system controlling haptic sensations from a vibrotactile feedback device connected to a computer.

US2017052593A1 discloses a haptic output device having an actuator and a processor. The actuator is configured to generate a haptic effect.

US2015/077373A1 discloses a haptic feedback system comprising a plurality of individually actuable actuators.

### Summary

According to a first aspect disclosed herein, there is provided a vibration-generating device for generating haptic feedback in a user device according to claim 1.

In an example, the controller is configured to end the second control signal at the same time that the first control signals ends.

In an example, the first actuator and the second actuator have the same resonant frequency.

In an example, at least one of the first actuator and the second actuator is a linear resonant actuator.

In an example, at least one of the first actuator and second actuator is an eccentric rotating mass actuator.

In an example, wherein at least one of the first actuator and second actuator is a piezo actuator.

In an example, the first actuator and second actuator are of the same type.

In an example, the vibration-generating device comprises a plurality of first and/or second actuators.

According to a second aspect disclosed herein, there is provided a method of generating haptic feedback in a user device according to claim 9.

In an example, the second control signal end at the same time that the first control signals ends.

According to a third aspect disclosed herein, there is provided a computer program for causing haptic feedback to be generated in a user device according to claim 11.

### Brief Description of the Drawings

To assist understanding of the present disclosure and to show how embodiments may be put into effect, reference is made by way of example to the accompanying drawings in which:
Figure 1 shows schematically an example of a known user device;
Figure 2 shows example graphs representing a control signal and resulting haptic feedback;
Figure 3 shows an example application in which sharp cut-off of haptic feedback may be desirable;
Figure 4 shows schematically an example of a user device in accordance with aspects disclosed herein; and
Figure 5 shows example graphs representing a control signal and resulting haptic feedback in accordance with an example of aspects disclosed herein.

### Detailed Description

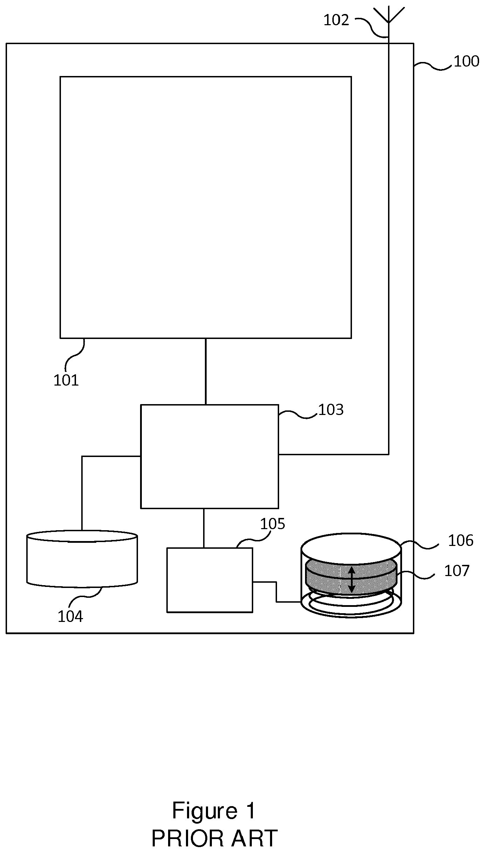

Figure 1 shows a known mobile phone 100. The mobile phone 100 comprises a user interface 101, a communications interface 102, a processor 103, a data storage 104, a vibration actuator controller 105, and a vibration actuator 106.

The processor 103 is operatively coupled to each of the user interface 101, the communications interface 102, the data storage 104, and the vibration actuator controller 105. The vibration actuation controller 105 is operatively coupled to the vibration actuator 106.

The user interface 101 allows a user to interact with the phone 100. In the example of Figure 1, the user interface 101 is a touchscreen which can both display graphical content to the user and receive user input via touch input (e.g. by the user's finger).

The communications interface 102 allow the phone 100 to make calls and send and receive data to and from external sources. For example, the communications interface 102 may connect to a cellular network for the provision of cellular calls, may connect to a network such as the Internet for downloading and/or uploading content, or both.

The data storage 104 is configured to store data such as applications to be run on the processor 103.

The vibration actuator 106 is a linear resonant actuator (LRA) comprising a mass 107 linearly movable within a housing via the electromagnetic force. That is, an electric current supplied to the LRA 106 results in an electromagnetic field being generated which exerts a force on the mass 107 and thereby moves the mass 107. Hence, providing an alternating current (AC) to the LRA 106 results in the mass 107 moving back and forth, vibrating. In this sense, the LRA 106 acts in a similar manner to a speaker. However, a speaker is designed to have a large bandwidth, whereas the LRA 106 has a narrow bandwidth around its resonant frequency. The amplitude of vibrations produced by the LRA 106 depends on the driving (AC) frequency and the resonant frequency of the LRA 106 itself, with the largest amplitude being exhibited when the LRA 106 is driven at its resonant frequency.

The vibration actuator controller 105 is configured to drive the LRA 106 with an AC drive signal substantially at (preferably within a few hertz of) the resonant frequency of the LRA 106. The vibration actuator controller 105 receives a control signal from the processor 103 and, in response, drives the LRA 106 for the duration of the control signal.

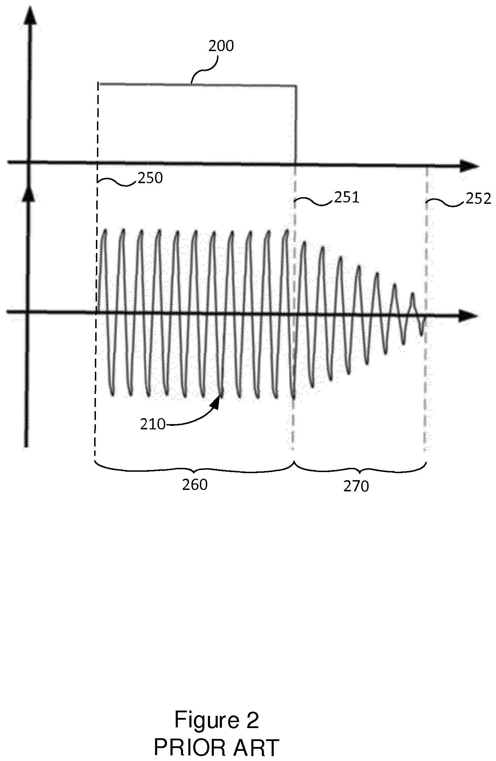

Figure 2 illustrates the relationship between a control signal 200 and vibration 210 generated by the LRA 106. The control signal 200 is provided to the vibration actuator controller 105 by the processor 103 in order to generate a desired haptic feedback (i.e. vibration). For example, the processor 103 might provide a control signal to generate haptic feedback for the user in response to receiving a message via communications interface 102.

At 250, the control signal 200 of the vibration actuator controller 105 is driving the LRA 106. The LRA 106 is therefore vibrating, as illustrated in the vibration 210 shown in Figure 2. For the duration of the control signal 200, the amplitude of the vibration 210 is substantially constant. The vibration 210 thereby comprises a driven portion 260 during which the LRA 106 is driven by the vibration actuator controller 105.

At the end 251 of the control signal 200, the vibration actuator controller 105 stops driving the LRA 106. However, due to inertial properties of the LRA 106, the amplitude of the generated vibration 210 does not immediately fall to zero. Instead, the amplitude of the vibration 210 exhibited by the LRA 106 decays for some time, eventually reaching zero at an end time 252. The vibration 210 thereby comprises a decaying portion 270 following the end of the control signal 200 during which the LRA 106 is not driven by the vibration actuator controller 105 but still vibrates, albeit in a decaying manner.

It is recognised in the present disclosure that the slow response time of the LRA 106 to the end of control signal 200 can be too slow in some scenarios, and that, in general, a "cleaner" cut-off of vibrations would be desirable as this allows for more precise control of haptic feedback.

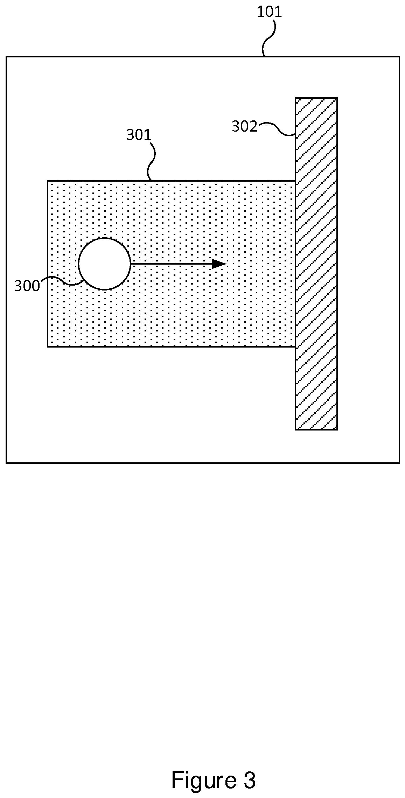

An example of such a scenario is shown in Figure 3. A graphic is displayed on the user interface 101 (a screen in this case) comprising a ball 300 moving along a rough surface 301 towards a wall 302. The roughness of the surface 301 is implied to the user via haptic feedback. That is, a control signal 200 is provided to the LRA 106 by the processor 103 causing it to vibrate while the ball 300 is moving on the surface 301. When the ball 300 (graphic) contacts the wall 302 (graphic), the control signal 200 is stopped. Residual vibrations of the LRA 106 during the decaying portion 207 (described above) will however be felt by the user. These residual vibrations imply to the user that the ball 300 is still moving along the rough surface 301, but this is not the case. Hence, it would be desirable to reduce the amplitude of the residual vibrations to give the haptic feedback felt by the user a sharper cut-off. Similar considerations apply for any kind of haptic feedback in computing devices, controllers for computing devices, etc.

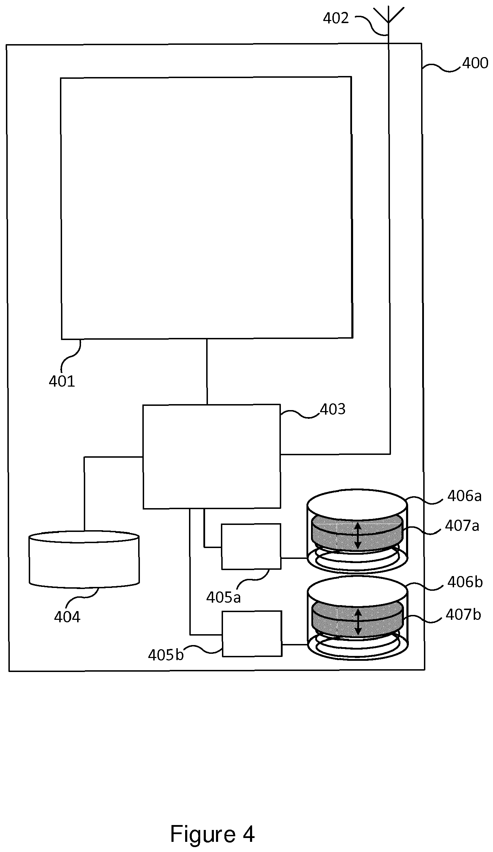

Figure 4 shows an example of a user device 400 in accordance with aspects described herein. The user device 400 comprises a user interface 401, a communications interface 402, a processor 403, a data storage 404, a first vibration actuator controller 405a, a second vibration actuator controller 405b, a first vibration actuator 406a, and a second vibration actuator 406b. The function of each of the vibration actuator controllers 405a, 405b may be controlled by the processor 403 or by separate components. Alternatively, the function of the vibration actuator controllers 405a, 405b may be provided by a single vibration actuator controller.

In the example of Figure 4, the user device 400 is a mobile phone. The user interface 401, communications interface 402, and data storage 404 may therefore be configured in the same manner as described above in relation to the respective components of the mobile device 100 shown in Figure 1.

The first vibration actuator 406a is shown in Figure 4 as a first LRA comprising a first mass 407a, and the second vibration actuator 406b is shown in Figure 4 as a second LRA comprising a second mass 407b. The general construction and operation of a generic LRA was described above in relation to LRA 106 of Figure 1 and so is not repeated here, but it is appreciated that this description applies to each of the first LRA 406a and second LRA 406b individually.

The first LRA 406a may be provided with a first LRA controller, and the second LRA 406b may be provided with a second LRA controller. In this case, each LRA controller is configured to control its respective LRA. As mentioned above, the first LRA controller 405a and second LRA controller 405b may be provided as separate components, as shown in Figure 4, or their functionality may be provided by the main processor 403. In other examples, the first LRA 406a and second LRA 406b are controlled by a single LRA controller. In any case, the processor 403 is able to control each of the first LRA 406a and second LRA 406b through one or more control signals, optionally via the one or more LRA controllers.

The processor 403 is configured to provide control signals to drive the first LRA 406a to provide a haptic feedback. That is, the processor 403 of Figure 4 drives the first LRA 406a in response to, for example, receiving a message or phone call via communications interface 402. Because of this, the first LRA 406a may be referred to as a "main" LRA.

The processor 403 is also configured to provide control signals to drive the second LRA 406b to generate an interfering vibration (interfering with the haptic feedback vibration of the first or "main" LRA 406a). Hence, the second LRA 406b may be referred to as an "auxiliary" LRA.

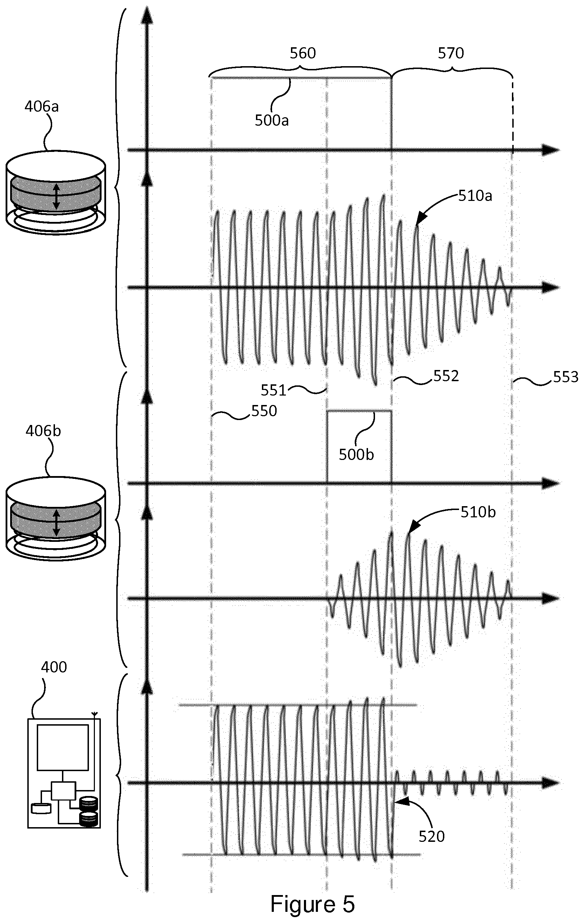

The operation of the first LRA 406a and second LRA 406b are described below with reference to Figure 5.

The first LRA 406a is shown being driven by a first control signal 500a to generate a first vibration 510a. Additionally, a second drive signal 500b is shown which drives the second LRA 406b to generate a second vibration 510b.

At 550, the first control signal 500a is driving the first LRA 406a (i.e. the first control signal 500a started some time earlier). The first control signal 500a is provided to the first LRA 406a only. Hence, the first LRA 406a is generating a first vibration 510a having a driven portion 560 while the first control signal 500a is "on", and a decaying portion 570 following the off time 552 of the first control signal 500a. It is appreciated that this behaviour, in particular the decaying portion 570 of the vibration 510a, is a consequence of inertia within the system, including in particular the first LRA 406a, as described above with reference to Figure 2.

The processor 403 also controls the second LRA 406b, via the second control signal 500b, to generate a second, interfering vibration 510b. The first LRA 406a and second LRA 406b are arranged such that an overall vibration 520 of the user device 400 felt by a user is a resultant vibration comprising a sum of the first vibration 510a and second vibration 510b. Hence, the first LRA 406a and second LRA 406b are located on the same physical device (such that vibrations from each LRA are transferred to the device itself). To maximise the desired effect, both LRAs are preferably located close to each other.

Specifically, the processor 403 controls the second LRA 406b to generate a second vibration 510b (also referred to as a cancellation pattern) which destructively interferes with the decaying portion 570 of the first vibration 510a. This results in the amplitude of the overall vibration 520 of the device 400 being diminished during the decay period 570, thereby reducing the amount of haptic feedback felt by the user after the first control signal 500a ends 552. Hence, the haptic feedback has a sharper cut-off in vibrations 520.

The second LRA 406b may require some amount of time between the start of receiving its control signal and reaching full amplitude. To accommodate for this, the processor 403 may control the second LRA 406b to turn on at a turn on time 551 slightly before the actual end 552 of the first control signal 500a. Hence, the second control signal 500b may start before the end of the first control signal 500a.

During this "ramp-up time" following the start 551 of the second control signal 500b, the amplitude of the second vibration 510b generated by the second LRA 406b will be increasing, typically from a zero starting amplitude to a maximum amplitude, as indicated in Figure 5 for the second vibration 510b. As the second vibration 510b is intended to cancel out the first vibration 510a, one result of this is that the overall vibration 520 may decrease in amplitude during this ramp-up time of the amplitude of the second vibration 510b. To compensate for this and to keep the total amplitude of the vibration as felt by a user constant, the processor 403 can control the first LRA 406a to increase the amplitude of the first vibration 510a following the start of the second vibration 510b to mirror the anti-phase vibration of the second vibration 510b during this ramp-up time. This can be seen in Figure 5 as the amplitude of the first vibration 510a increasing over time within the duration of the second control signal 500b.

The second control signal 500b in the example of Figure 5 ends at the same time 552 as the first control signal 500a. This is particularly preferable if the first LRA 406a and second LRA 406b are identical, or have the same inertial properties, as this means the amplitude of the first vibration 510a and second vibration 510b during the decay portion 570 following the end of the control signals 500a,b will decay at the same rate, minimising the resultant vibration 520 during this period. However, the second LRA 406b may continue to be driven (by the second control signal 500b) following the end of the first control signal 500a, particularly if the second LRA 406b is of a type that decays quicker than the first LRA 406a, or vice versa if the first LRA 406a is of a type that decays quicker than the second LRA 406b.

The oscillation frequency of the first LRA 406a is determined by the particular hardware used (e.g. the spring and mass 407a system of the LRA 406a). That is, the first LRA 406a will vibrate at its resonant frequency. The value of this frequency can be known to the processor 403 (e.g. stored in data storage 404). If the second LRA 406b is in substance identical to the first LRA 406a, it will have the same or practically the same resonant frequency. Therefore, the processor 403 can control the second LRA 406b to destructively interfere with the first LRA 406a by controlling the second LRA 406b to vibrate 180-degrees out of phase of the first vibration 510a. Even if not identical, the LRAs may nevertheless have the same or similar resonant frequency.

It is understood that that the vibrations of an LRA coincide with an AC frequency of a drive signal provided to the LRA. Hence, the processor 403 is able to control the first LRA 406a and second LRA 406b to be 180-degrees out of phase by providing respective drive signals which are 180-degrees out of phase.

Note that even if the first LRA 406a and second LRA 406b do not have the same resonant frequency, the overall resulting vibration 520 will "beat" due to the difference in frequencies. The beat frequency will typically be of a (very) low frequency and may be less noticeable by the user, still resulting in the feeling of a sharp end to the haptic feedback.

The above has been described with reference to two LRAs consisting of a main LRA 406a and an auxiliary LRA 406b, but the concepts relating to generating additional vibrations to destructively interfere with main vibrations apply equally to any number of main and auxiliary LRAs. In an example, there may be two or more main LRAs configured to generate (wanted) haptic feedback, and a single auxiliary LRA configured to generate additional vibrations to alter the haptic feedback of the two main LRAs. In another example, there may be one main LRA configured to generate (wanted) haptic feedback, and two or more auxiliary LRAs configured to generate additional vibrations to alter the haptic feedback of the main LRA. In yet another example, there may be a plurality of main LRAs and a plurality of auxiliary LRAs.

The above has been described with reference to a user device 400 which provides vibrations for notifications or feedback to the user. The user device 400 may be for example a computing device, including for example a mobile phone, a smart phone, a tablet or laptop computer or the like, including so-called phablet computers, etc., or a controller for a computing device, such as a joystick or game controller, etc. In general, the concepts described herein apply to devices that generate haptic feedback. These are typically devices designed to be held by a user.

It is appreciated that the first LRA 406a and second LRA 406b are only examples of actuators for generating vibrations. Other examples of suitable vibrators include, but are not limited to, eccentric mass resonators (ERMs) and piezo actuators. Hence, one or more of the LRAs 406a,b may be replaced with a different type of vibration actuator. It is also not necessary for the two (or more) actuators to be of the same type in all cases, because the generated first vibration 510a and second vibration 510b will interfere with each other regardless of how they are generated.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features within the scope of the invention which is defined by the appended claims. . In addition, any feature described in relation to any one example or embodiment may also be used in combination with one or more features of any other of the examples or embodiments, or any combination of any other of the examples or embodiments within the scope of the invention as defined by the appended claims. Furthermore, equivalents and modifications not described herein may also be employed within the scope of the invention, which is defined in the claims.

## Claims

1. A vibration-generating device for generating haptic feedback in a user device (400), the vibration-generating device comprising:
a first actuator (406a) for generating a first vibration (510a) in response to a first control signal (500a), the first vibration (5 10a) having a driven portion (560) when the first actuator (406a) is driven by the first control signal (500a) and a decaying portion (570) when the first actuator (406a) is not driven by the first control signal (500a);
a second actuator (406b) for generating a second vibration (510b) in response to a second control signal (500b); and
a controller configured to control the generation of the second vibration (510b) by the second actuator (406b) such that the second vibration (510b) destructively interferes with the decaying portion (570) of the first vibration (510a);
wherein the controller is configured to control the second actuator (406b) to begin generating the second vibration (510b) before the first control signal (500a) ends; and
**characterized in that**:
the controller is configured to control the generation of the first vibration (510a) by the first actuator (406a) such that the amplitude of vibration of the driven portion (560) of the first vibration (510a) increases as the second actuator (406b) begins generating the second vibration (510b).

2. A vibration-generating device according to claim 1, wherein the controller is configured to end the second control signal (500b) at the same time that the first control signal (500a) ends.

3. A vibration-generating device according to any of claims 1 to 2, wherein the first actuator (406a) and the second actuator (406b) have the same resonant frequency.

4. A vibration-generating device according to any of claims 1 to 3, wherein at least one of the first actuator (406a) and the second actuator (406b) is a linear resonant actuator.

5. A vibration-generating device according to any of claims 1 to 3, wherein at least one of the first actuator (406a) and second actuator (406b) is an eccentric rotating mass actuator.

6. A vibration-generating device according to any of claims 1 to 3, wherein at least one of the first actuator (406a) and second actuator (406b) is a piezo actuator.

7. A vibration-generating device according to any of claims 1 to 6, wherein the first actuator (406a) and second actuator (406b) are of the same type.

8. A vibration-generating device according to any of claims 1 to 7, comprising a plurality of first and/or second actuators (406a, 406b).

9. A method of generating haptic feedback in a user device, the method comprising:
generating, by a first actuator (406a), a first vibration (510a) in response to a first control signal (500a), the first vibration (510a) having a driven portion (560) when the first actuator (406a) is driven by the first control signal (500a) and a decaying portion (570) when the first actuator (406a) is not driven by the first control signal (500a);
generating, by a second actuator (406b) in response to a second control signal (500b), a second vibration (510b) such that the second vibration (510b) destructively interferes with the decaying portion (570) of the first vibration (510a);
wherein the second actuator (406b) begins generating the second vibration (510b) before the first control signal (500a) ends; and
**characterized in that**:
the first actuator (406a) generates the first vibration (510a) such that the amplitude of vibration of the driven portion (560) of the first vibration (510a) increases as the second actuator (406b) begins generating the second vibration (510b).

10. A method according to claim 9, wherein the second control signal (500b) end at the same time that the first control signal (500a) ends.

11. A computer program for causing haptic feedback to be generated in a user device comprising the vibration generation unit of claims 1 - 8, the computer program comprising computer-executable code so as when executed by one or more processors of the user device, to the user device:
controls the first actuator (406a) to generate the first vibration (510a) in response to the first control signal (500a), the first vibration (510a) having a driven portion (560) when the first actuator (406a) is driven by the first control signal (500a), and a decaying portion (570) when the first actuator (406a) is not driven by the first control signal (500a); and
controls the second actuator (406b) to generate the second vibration (510b) in response to the second control signal (500b) such that the second vibration (510b) destructively interferes with the decaying portion (570) of the first vibration (510a);
wherein the second actuator (406b) begins generating the second vibration (510b) before the first control signal (500a) ends; and
**characterized in that**:
the first actuator (406a) generates the first vibration (510a) such that the amplitude of vibration of the driven portion (560) of the first vibration (510a) increases as the second actuator (406b) begins generating the second vibration (510b).

## Patentansprüche

1. Vibrationserzeugende Vorrichtung zum Erzeugen einer haptischen Rückmeldung in einer Benutzervorrichtung (400), wobei die vibrationserzeugende Vorrichtung aufweist:
einen ersten Aktuator (406a) zum Erzeugen einer ersten Vibration (510a) in Reaktion auf ein erstes Steuersignal (500a), wobei die erste Vibration (510a) einen angetriebenen Teil (560) aufweist, wenn der erste Aktuator (406a) durch das erste Steuersignal (500a) angetrieben wird, und einen abklingenden Teil (570), wenn der erste Aktuator (406a) nicht durch das erste Steuersignal (500a) angetrieben wird;
einen zweiten Aktuator (406b) zum Erzeugen einer zweiten Vibration (510b) in Reaktion auf ein zweites Steuersignal (500b); und
eine Steuerung, die so konfiguriert ist, dass sie die Erzeugung der zweiten Vibration (510b) durch den zweiten Aktuator (406b) so steuert, dass die zweite Vibration (510b) den abklingenden Teil (570) der ersten Vibration (510a) zerstörerisch stört;
wobei die Steuerung so konfiguriert ist, dass sie den zweiten Aktuator (406b) so steuert, dass er mit der Erzeugung der zweiten Vibration (510b) beginnt, bevor das erste Steuersignal (500a) endet; und
**dadurch gekennzeichnet, dass**:
die Steuerung so konfiguriert ist, dass sie die Erzeugung der ersten Vibration (510a) durch den ersten Aktuator (406a) so steuert, dass die Amplitude der Vibration des angetriebenen Teils (560) der ersten Vibration (510a) zunimmt, wenn der zweite Aktuator (406b) beginnt, die zweite Vibration (510b) zu erzeugen.

2. Vibrationserzeugende Vorrichtung nach Anspruch 1, wobei das Steuergerät so konfiguriert ist, dass es das zweite Steuersignal (500b) zur gleichen Zeit beendet, zu der das erste Steuersignal (500a) endet.

3. Vibrationserzeugende Vorrichtung nach einem der Ansprüche 1 bis 2, wobei der erste Aktuator (406a) und der zweite Aktuator (406b) die gleiche Resonanzfrequenz haben.

4. Vorrichtung zur Erzeugung von Vibrationen nach einem der Ansprüche 1 bis 3, wobei mindestens einer der ersten Aktuatoren (406a) und der zweite Aktuator (406b) ein linearer Resonanzaktuator ist.

5. Vibrationserzeugende Vorrichtung nach einem der Ansprüche 1 bis 3, wobei mindestens einer der ersten (406a) und zweiten (406b) Aktuatoren ein exzentrischer Aktuator mit rotierender Masse ist.

6. Vibrationserzeugende Vorrichtung nach einem der Ansprüche 1 bis 3, wobei mindestens einer der ersten Aktuatoren (406a) und zweiten Aktuatoren (406b) ein Piezo-Aktuator ist.

7. Vibrationserzeugende Vorrichtung nach einem der Ansprüche 1 bis 6, wobei der erste Aktuator (406a) und der zweite Aktuator (406b) vom gleichen Typ sind.

8. Vibrationserzeugende Vorrichtung nach einem der Ansprüche 1 bis 7, die eine Vielzahl von ersten und/oder zweiten Aktuatoren (406a, 406b) aufweist.

9. Verfahren zur Erzeugung einer haptischen Rückmeldung in einer Vorrichtung für den Benutzer, wobei das Verfahren aufweist
Erzeugen einer ersten Vibration (510a) durch einen ersten Aktuator (406a) in Reaktion auf ein erstes Steuersignal (500a), wobei die erste Vibration (510a) einen angetriebenen Teil (560) aufweist, wenn der erste Aktuator (406a) durch das erste Steuersignal (500a) angetrieben wird, und einen abklingenden Teil (570), wenn der erste Aktuator (406a) nicht durch das erste Steuersignal (500a) angetrieben wird;
Erzeugen einer zweiten Vibration (510b) durch einen zweiten Aktuator (406b) in Reaktion auf ein zweites Steuersignal (500b), so dass die zweite Vibration (510b) den abklingenden Teil (570) der ersten Vibration (510a) destruktiv stört;
wobei der zweite Aktuator (406b) mit der Erzeugung der zweiten Vibration (510b) beginnt, bevor das erste Steuersignal (500a) endet; und
**dadurch gekennzeichnet, dass**:
der erste Aktuator (406a) die erste Vibration (510a) so erzeugt, dass die Amplitude der Vibration des angetriebenen Teils (560) der ersten Vibration (510a) zunimmt, wenn der zweite Aktuator (406b) beginnt, die zweite Vibration (510b) zu erzeugen.

10. Verfahren nach Anspruch 9, wobei das zweite Steuersignal (500b) zur gleichen Zeit endet wie das erste Steuersignal (500a).

11. Computerprogramm zum Veranlassen der Erzeugung einer haptischen Rückmeldung in einer Vorrichtung des Benutzers, die die Einheit zur Erzeugung von Vibrationen nach einem der Ansprüche 1 bis 8 aufweist, wobei das Computerprogramm einen computerausführbaren Code aufweist, der, wenn er von einem oder mehreren Prozessoren der Vorrichtung des Benutzers ausgeführt wird, zu der Vorrichtung des Benutzers:
den ersten Aktuator (406a) steuert, um die erste Vibration (510a) in Reaktion auf das erste Steuersignal (500a) zu erzeugen, wobei die erste Vibration (510a) einen angetriebenen Teil (560) aufweist, wenn der erste Aktuator (406a) durch das erste Steuersignal (500a) angetrieben wird, und einen abklingenden Teil (570), wenn der erste Aktuator (406a) nicht durch das erste Steuersignal (500a) angetrieben wird; und
den zweiten Aktuator (406b) steuert, um die zweite Vibration (510b) in Reaktion auf das zweite Steuersignal (500b) zu erzeugen, so dass die zweite Vibration (510b) den abklingenden Teil (570) der ersten Vibration (510a) zerstörerisch stört;
wobei der zweite Aktuator (406b) beginnt, die zweite Vibration (510b) zu erzeugen, bevor das erste Steuersignal (500a) endet; und
**dadurch gekennzeichnet, dass**:
der erste Aktuator (406a) die erste Vibration (510a) so erzeugt, dass die Amplitude der Vibration des angetriebenen Teils (560) der ersten Vibration (510a) zunimmt, wenn der zweite Aktuator (406b) beginnt, die zweite Vibration (510b) zu erzeugen.

## Revendications

1. Dispositif de génération de vibrations pour générer un retour haptique dans un dispositif d'utilisateur (400), le dispositif de génération de vibrations comprenant :
un premier actionneur (406a) pour générer une première vibration (510a) en réponse à un premier signal de commande (500a), la première vibration (510a) ayant une partie entraînée (560) lorsque le premier actionneur (406a) est entraîné par le premier signal de commande (500a) et une partie décroissante (570) lorsque le premier actionneur (406a) n'est pas entraîné par le premier signal de commande (500a) ;
un deuxième actionneur (406b) pour générer une deuxième vibration (510b) en réponse à un deuxième signal de commande (500b) ; et
un contrôleur configuré pour commander la génération de la deuxième vibration (510b) par le deuxième actionneur (406b) de sorte que la deuxième vibration (510b) interfère de manière destructive avec la partie décroissante (570) de la première vibration (510a) ;
dans lequel le contrôleur est configuré pour commander le deuxième actionneur (406b) afin qu'il commence à générer la deuxième vibration (510b) avant que le premier signal de commande (500a) ne se termine ; et
**caractérisé en ce que** :
le contrôleur est configuré pour contrôler la génération de la première vibration (510a) par le premier actionneur (406a) de sorte que l'amplitude de la vibration de la partie entraînée (560) de la première vibration (510a) augmente lorsque le deuxième actionneur (406b) commence à générer la deuxième vibration (510b).

2. Dispositif générateur de vibrations selon la revendication 1, dans lequel le contrôleur est configuré pour mettre fin au deuxième signal de commande (500b) en même temps que le premier signal de commande (500a).

3. Dispositif générateur de vibrations selon l'une des revendications 1 à 2, dans lequel le premier actionneur (406a) et le second actionneur (406b) ont la même fréquence de résonance.

4. Dispositif générateur de vibrations selon l'une des revendications 1 à 3, dans lequel au moins l'un du premier actionneur (406a) et du second actionneur (406b) est un actionneur à résonance linéaire.

5. Dispositif générateur de vibrations selon l'une quelconque des revendications 1 à 3, dans lequel au moins l'un du premier actionneur (406a) et du second actionneur (406b) est un actionneur à masse rotative excentrée.

6. Dispositif générateur de vibrations selon l'une quelconque des revendications 1 à 3, dans lequel au moins l'un du premier actionneur (406a) et du second actionneur (406b) est un actionneur piézoélectrique.

7. Dispositif générateur de vibrations selon l'une quelconque des revendications 1 à 6, dans lequel le premier actionneur (406a) et le second actionneur (406b) sont du même type.

8. Dispositif générateur de vibrations selon l'une des revendications 1 à 7, comprenant plusieurs premiers et/ou seconds actionneurs (406a, 406b).

9. Méthode de génération d'un retour haptique dans un dispositif d'utilisateur, la méthode comprenant :
générer, par un premier actionneur (406a), une première vibration (510a) en réponse à un premier signal de commande (500a), la première vibration (510a) ayant une partie entraînée (560) lorsque le premier actionneur (406a) est entraîné par le premier signal de commande (500a) et une partie décroissante (570) lorsque le premier actionneur (406a) n'est pas entraîné par le premier signal de commande (500a) ;
générer, par un deuxième actionneur (406b) en réponse à un deuxième signal de commande (500b), une deuxième vibration (510b) de sorte que la deuxième vibration (510b) interfère de manière destructive avec la partie décroissante (570) de la première vibration (510a) ;
dans lequel le second actionneur (406b) commence à générer la seconde vibration (510b) avant que le premier signal de commande (500a) ne se termine ; et
**caractérisé par le fait que** :
le premier actionneur (406a) génère la première vibration (510a) de telle sorte que l'amplitude de la vibration de la partie entraînée (560) de la première vibration (510a) augmente lorsque le deuxième actionneur (406b) commence à générer la deuxième vibration (510b).

10. Procédé selon la revendication 9, dans lequel le deuxième signal de commande (500b) se termine en même temps que le premier signal de commande (500a).

11. Programme informatique permettant de générer un retour haptique dans un dispositif utilisateur comprenant l'unité de génération de vibrations des revendications 1 à 8, le programme informatique comprenant un code exécutable par ordinateur qui, lorsqu'il est exécuté par un ou plusieurs processeurs du dispositif utilisateur, permet à ce dernier de
commande le premier actionneur (406a) pour générer la première vibration (510a) en réponse au premier signal de commande (500a), la première vibration (510a) ayant une partie entraînée (560) lorsque le premier actionneur (406a) est entraîné par le premier signal de commande (500a), et une partie décroissante (570) lorsque le premier actionneur (406a) n'est pas entraîné par le premier signal de commande (500a) ; et
commande le deuxième actionneur (406b) pour générer la deuxième vibration (510b) en réponse au deuxième signal de commande (500b) de sorte que la deuxième vibration (510b) interfère de manière destructive avec la partie décroissante (570) de la première vibration (510a) ;
dans lequel le second actionneur (406b) commence à générer la seconde vibration (510b) avant que le premier signal de commande (500a) ne se termine ; et
**caractérisé par le fait que** :
le premier actionneur (406a) génère la première vibration (510a) de telle sorte que l'amplitude de vibration de la partie entraînée (560) de la première vibration (510a) augmente lorsque le deuxième actionneur (406b) commence à générer la deuxième vibration (510b).
